Europäisches Patentamt

European Patent Office

Office européen des brevets

(11) Publication number: **0 158 445**
**B1**

# (12) EUROPEAN PATENT SPECIFICATION

(45) Date of publication of patent specification: **01.03.89**

(21) Application number: **85301704.4**

(22) Date of filing: **12.03.85**

(51) Int. Cl.⁴: **A 01 N 57/20** // (A01N57/20, 43:36)

(54) **Synergistic herbicidal compositions.**

(30) Priority: **19.03.84 US 591082**

(43) Date of publication of application:
**16.10.85 Bulletin 85/42**

(45) Publication of the grant of the patent:
**01.03.89 Bulletin 89/09**

(84) Designated Contracting States:
**AT BE CH DE FR GB IT LI NL SE**

(56) References cited:
**EP-A-0 015 453**
**EP-A-0 053 871**

(73) Proprietor: **STAUFFER CHEMICAL COMPANY**
**Westport Connecticut 06881 (US)**

(72) Inventor: **Groenwold, Bareld Egge**
**2059 Kent Drive**
**Los Altos California 94022 (US)**
Inventor: **Pereiro, Fernando**
**7 Chemin Des palettes**
**CH-1212 Grand-Lacy Geneva (CH)**

(74) Representative: **Smith, Sydney et al**
**Elkington and Fife Beacon House 113 Kingsway**
**London WC2B 6PP (GB)**

Courier Press, Leamington Spa, England.

**Description**

The protection of crops from weeds and other vegetation which inhibit crop growth by consuming valuable acreage or soil nutrients is a constantly recurring problem in agriculture. To help combat this problem, researchers in the herbicide field have produced an extensive variety of chemicals and chemical formulations effective in the control of such unwanted growth. Chemical herbicides of many types have been disclosed in the literature and a large number are in commercial use.

In many cases, active herbicides have been shown to be more effective in combination than when applied individually. The result is often termed "synergism", since the combination demonstrates a potency or activity level exceeding that which might be expected from a mere addition of the individual potencies of the components. The present invention resides in the discovery that two compounds already known individually for their herbicidal potency display this synergistic effect when applied in combination.

The two herbicides forming the combination which is the subject of the present invention are both known in the art of chemical herbicides for their activity independent of each other.

The N-phosphonomethylglycine salt which comprises one of the constituents of the herbicidal composition of the invention is disclosed in US—A—4,315,765 (Large) and EP—A—53871, as is its excellent herbicidal activity.

The N-phenyl pyrrolidone which comprises the other compound in the composition of the invention is disclosed in US—A—4,110,105 (Teach).

Also, EP—A—15453 mentions a synergistic herbicidal composition of the pyrrolidone and N - phosphonomethylglycine.

It has now been discovered that synergism in the control of undesired vegetation is exhibited by compositions comprising an herbicidally effective amount of 1 - m - trifluoromethylphenyl - 3 - chloro - 4 - chloromethyl - 2 - pyrrolidone and the trimethylsulfonium salt of N - phosphonomethylglycine and optionally a diluent or carrier in a pyrrolidone:N - phosphonomethylglycine weight ratio of from 1:6 to 4:1.

(The present surprising advantage is particularly noticeable wherein the undesirable vegetation comprises *Rumex crispus, Sorghum halepense, Convolvulus arvenis, Agropyron repens, Poa trivialis* or yellow nutsedge.)

A "herbicide", as the term is used herein, is a compound which controls or modifies the growth of plants. The term "herbicidally effective amount" is used to indicate any quantity of such a compound which is capable of producing such an effect. Controlling or modifying effects include all deviations from natural development, for example, killing, retardation, defoliation, desiccation, regulation, stunting, tillering, leaf burn, dwarfing and the like. The term "plants" is used to include germinating seeds, emerging seedlings, and established vegetation, including roots and above-ground portions.

The term "synergism" is employed in its traditional sense and describes the result obtained when the herbicidal effect of a composition containing two or more active herbicidal compounds is greater than the sum of the herbicidal effects of the compounds when used alone.

Application rates will depend upon the weeds to be controlled and the degree of control desired. In general, the compositions of this invention are most efficiently employed at a rate of 0.01 to 50 pounds per acre (0.011 to 56 kilograms per hectare) of the active ingredients, preferably 0.1 to 25 pounds per acre (0.11 to 28 kilograms per hectare).

Herbicidal compositions illustrative of those embodied in the instant application were prepared and evaluated for synergistic herbicidal effect. The results are shown in the following examples.

Examples

In the tables set forth below, the results of a series of tests are indicated which show synergistic activity between the two compounds which make up the composition of the present invention. The protocol for these tests is set forth below.

Test 1—Tables 1, 2 and 3

| | |
|---|---|
| Test layout: | randomized complete block |
| Number of replications: | 3 |
| Plot size | 20 m² |
| Spray equipment: | knapsack sprayer |
| Spray volume: | 167 L/ha |
| Application time: | post-emergence |
| Growth stage of weeds: | *Agropyron repens*: quackgrass: 30—40 cm |

Test 2—Table 4

| | |
|---|---|
| Test layout: | randomized complete block |
| Number of replications: | 3 |
| Plot size: | 20 m² |
| Spray equipment: | knapsack sprayer |
| Spray volume: | 167 L/ha |
| Application time: | post-emergence |
| Growth stage of weeds: | *Poa trivialis*: bluegrass: flowering |
| | *Taraxacum*: dandelion: pre-flowering |

Test 3—Tables 5 and 6

| | |
|---|---|
| Test layout: | randomized complete block |
| Number of replications: | 2 |
| Plot size | 20 m² |
| Spray equipment: | knapsack sprayer |
| Spray volume: | 500 L/ha |
| Application time: | post-emergence |
| Growth stage of weeds: | *Cyperus rotundus*: purple nutsedge: pre-flowering |
| | *Sorghum halepense:* johnsongrass: boot stageg |

Test 4—Table 7

| | |
|---|---|
| Test layout: | randomized complete block |
| Number of replications: | 3 |
| Plot size: | 16 m² |
| Spray equipment: | knapsack sprayer |
| Spray volume: | 400 L/ha |
| Application time: | post-emergence |
| Growth stage of weeds: | *Convolvulus arvenis*: field bindweed: flowering |

Test 5—Table 8

| | |
|---|---|
| Test layout: | randomized complete block |
| Number of replications: | 3 |
| Plot size: | 9 m² |
| Spray equipment: | tractor mounted CO₂ sprayer |
| Spray volume: | 200 L/ha |
| Application time: | post-emergence |
| Growth stage of weeds: | *Rumex crispus*: curly dock: just prior to flowering |

Test 6—Table 9

| | |
|---|---|
| Test layout | randomized complete block |
| Number of replications: | 3 |
| Spray equipment: | tractor boom sprayer |
| Spray volume: | 203 L/ha (21.7 U.S. gal/acre) |
| Application time: | post-emergence |
| Growth stage of weed: | pre-flowering |

The results of these tests are listed in Tables 1—9 in the columns headed by the symbol "O" (indicating the "observed" results). These results were then compared with the expected results, shown in the columns headed by the symbol "E", derived from Limpel's formula (Limpel et al., 1962, "Weed Control by Dimethylchloroterephthalate Alone and in Certain Combinations," *Proc. NEWCC*, Vol. 16, pp. 48—53):

$$E = X + Y - \frac{XY}{100}$$

where
  X=observed percent injury when one of the herbicides is used alone, and
  Y=observed percent injury when the other herbicide is used alone.
  A single asterisk (*) is used to indicate the tests where the results show synergism, i.e., where the observed result exceeds the expected result. In the tables below, the abbreviation "TCCP" stands for 1 - m - trifluoromethylphenyl - 3 - chloro - 4 - chloromethyl - 2 - pyrrolidone; whereas "PMG" stands for trimethylsulfonium salt of N - phosphonomethylglycine.

3

# EP 0 158 445 B1

## TABLE 1

### % Desiccation—*Rumex Crispus*

| Treatment | Rate (L/ha) | T+12 | | T+18 | | T+25 | |
|---|---|---|---|---|---|---|---|
| | | O | E | O | E | O | E |
| Untreated | | | | | | | |
| PMG | 2 | 38 | | 55 | | 73 | |
| PMG | 3 | 23 | | 48 | | 90 | |
| TCCP | 1 | 13 | | 10 | | 43 | |
| TCCP | 2 | 20 | | 20 | | 18 | |
| TCCP | 4 | 33 | | 18 | | 23 | |
| PMG+TCCP | 2+1 | 38 | 46 | 70* | 59 | 98* | 85 |
| PMG+TCCP | 2+2 | 33 | 50 | 75* | 64 | 93* | 78 |
| PMG+TCCP | 2+4 | 48 | 58 | 73* | 63 | 100* | 79 |
| PMG+TCCP | 3+1 | 30 | 33 | 83* | 53 | 99* | 94 |
| PMG+TCCP | 3+2 | 55* | 38 | 83* | 58 | 100* | 92 |
| PMG+TCCP | 3+4 | 43 | 48 | 80* | 57 | 100* | 92 |

\* Indicates synergism.

## TABLE 2

### Control of *Poa trivialis* (%)

| Treatment | Rate (L/ha) | T+12 | | T+18 | | T+25 | |
|---|---|---|---|---|---|---|---|
| | | O | E | O | E | O | E |
| Untreated | | | | | | | |
| PMG | 2 | 63 | | 88 | | 100 | |
| PMG | 3 | 31 | | 85 | | 100 | |
| TCCP | 1 | 5 | | 15 | | 70 | |
| TCCP | 2 | 1 | | 10 | | 40 | |
| TCCP | 4 | 5 | | 15 | | 63 | |
| PMG+TCCP | 2+1 | 48 | 65 | 78 | 90 | 100 | 100 |
| PMG+TCCP | 2+2 | 63* | 56 | 93* | 89 | 100 | 100 |
| PMG+TCCP | 2+4 | 68* | 65 | 80 | 90 | 100 | 100 |
| PMG+TCCP | 3+1 | 65* | 34 | 100* | 87 | 100 | 100 |
| PMG+TCCP | 3+2 | 98* | 29 | 100* | 86 | 100 | 100 |
| PMG+TCCP | 3+4 | 93* | 34 | 100* | 86 | 100 | 100 |

\* Indicates synergism.

4

### TABLE 3

| Treatment | Rate (L/ha) | Control of *Agropyron repens* (%) | | | | | |
|---|---|---|---|---|---|---|---|
| | | T+12 | | T+18 | | T+25 | |
| | | O | E | O | E | O | E |
| Untreated | | | | | | | |
| PMG | 2 | 59 | | 70 | | 98 | |
| PMG | 3 | 44 | | 58 | | 90 | |
| TCCP | 1 | 11 | | 23 | | 43 | |
| TCCP | 2 | 15 | | 20 | | 10 | |
| TCCP | 4 | 11 | | 15 | | 23 | |
| PMG+TCCP | 2+1 | 33 | 64 | 60 | 77 | 100* | 99 |
| PMG+TCCP | 2+2 | 63 | 66 | 83* | 76 | 100* | 98 |
| PMG+TCCP | 2+4 | 53 | 64 | 68 | 74 | 100* | 98 |
| PMG+TCCP | 3+1 | 60* | 50 | 100* | 68 | 100* | 94 |
| PMG+TCCP | 3+2 | 98* | 52 | 95* | 66 | 100* | 91 |
| PMG+TCCP | 3+4 | 93* | 50 | 100* | 64 | 100* | 92 |

* Indicates synergism.

### TABLE 4

| Treatment | Rate (L/ha) | Control of *Poa trivialis* (%) | | | | | |
|---|---|---|---|---|---|---|---|
| | | T+12 | | T+18 | | T+25 | |
| | | O | E | O | E | O | E |
| Untreated | | | | | | | |
| PMG | 4 | 83 | | 100 | | 100 | |
| PMG | 6 | 68 | | 100 | | 100 | |
| TCCP | 3 | 5 | | 50 | | 100 | |
| TCCP | 4 | 6 | | 40 | | 78 | |
| TCCP | 6 | 5 | | 30 | | 73 | |
| PMG+TCCP | 4+3 | 65 | 84 | 100 | 100 | 100 | 100 |
| PMG+TCCP | 4+4 | 80 | 84 | 100 | 100 | 100 | 100 |
| PMG+TCCP | 4+6 | 90* | 84 | 100 | 100 | 100 | 100 |
| PMG+TCCP | 6+3 | 75* | 70 | 100 | 100 | 100 | 100 |
| PMG+TCCP | 6+4 | 73* | 70 | 100 | 100 | 100 | 100 |
| PMG+TCCP | 6+6 | 88* | 70 | 100 | 100 | 100 | 100 |

T=time of application (in days).     * Indicates synergism.

TABLE 5

% Desiccation—*Rumex Crispus*

| Treatment | Rate (L/ha) | T+23 | | T+30 | | T+44 | |
|---|---|---|---|---|---|---|---|
| | | O | E | O | E | O | E |
| Untreated | | | | | | | |
| PMG | 4 | 50 | | 65 | | 95 | |
| PMG | 6 | 77 | | 80 | | 95 | |
| TCCP | 3 | 7 | | 7 | | 0 | |
| TCCP | 4 | 7 | | 7 | | 0 | |
| TCCP | 6 | 7 | | 7 | | 2 | |
| PMG+TCCP | 4+3 | 65* | 53 | 80* | 67 | 90 | 95 |
| PMG+TCCP | 4+4 | 80 | 53 | 82* | 67 | 90 | 95 |
| PMG+TCCP | 4+6 | 77* | 53 | 85* | 67 | 90 | 95 |
| PMG+TCCP | 6+3 | 80* | 72 | 85* | 81 | 90 | 95 |
| PMG+TCCP | 6+4 | 85* | 72 | 90* | 81 | 97* | 95 |
| PMG+TCCP | 6+6 | 90* | 72 | 90* | 81 | 97* | 95 |

* Indicates synergism.

TABLE 6

Control of *Sorghum halepense* (%)

| Treatment | Rate (L/ha) | T+11 | | T+17 | | T+23 | |
|---|---|---|---|---|---|---|---|
| | | O | E | O | E | O | E |
| Untreated | | | | | | | |
| PMG | 4 | 50 | | 82 | | 95 | |
| PMG | 6 | 80 | | 82 | | 95 | |
| TCCP | 3 | 5 | | 5 | | 0 | |
| TCCP | 4 | 5 | | 5 | | 0 | |
| TCCP | 6 | 5 | | 5 | | 0 | |
| PMG+TCCP | 4+3 | 75* | 52 | 80 | 83 | 97 | 95 |
| PMG+TCCP | 4+4 | 80* | 52 | 80 | 83 | 90 | 95 |
| PMG+TCCP | 4+6 | 80* | 52 | 82 | 83 | 90 | 95 |
| PMG+TCCP | 6+3 | 75 | 81 | 85* | 83 | 92 | 95 |
| PMG+TCCP | 6+4 | 80 | 81 | 90* | 83 | 97* | 95 |
| PMG+TCCP | 6+6 | 90* | 81 | 90* | 83 | 97* | 95 |

* Indicates synergism.

# EP 0 158 445 B1

## TABLE 7

### Control of *Convolvulus arvenis* (%)

| Treatment | Rate (L/ha) | T+7 | | T+14 | | T+21 | | T+28 | |
|---|---|---|---|---|---|---|---|---|---|
| | | O | E | O | E | O | E | O | E |
| Untreated | | | | | | | | | |
| PMG | 4 | 11 | | 77 | | 87 | | 98 | |
| PMG | 6 | 36 | | 92 | | 87 | | 98 | |
| TCCP | 3 | 6 | | 35 | | 30 | | 51 | |
| TCCP | 4 | 6 | | 43 | | 56 | | 54 | |
| TCCP | 6 | 9 | | 57 | | 65 | | 67 | |
| PMG+TCCP | 4+3 | 36* | 16 | 92* | 85 | 95* | 91 | 97 | 99 |
| PMG+TCCP | 4+4 | 23* | 16 | 83 | 87 | 94 | 94 | 99 | 99 |
| PMG+TCCP | 4+6 | 34* | 19 | 93* | 90 | 97* | 95 | 98 | 99 |
| PMG+TCCP | 6+3 | 40 | 40 | 99* | 95 | 99* | 98 | 99 | 99 |
| PMG+TCCP | 6+4 | 60* | 40 | 100* | 95 | 100* | 99 | 99 | 99 |
| PMG+TCCP | 6+6 | 60* | 42 | 99* | 97 | 100* | 99 | 99 | 99 |

* Indicates synergism.

## TABLE 8

### % Desiccation—*Rumex Crispus*

| Treatment | Rate (L/ha) | T+23 | | T+30 | | T+44 | |
|---|---|---|---|---|---|---|---|
| | | O | E | O | E | O | E |
| Untreated | — | 0 | | 0 | | 0 | |
| PMG | 4 | 78 | | 78 | | 90 | |
| PMG | 6 | 85 | | 87 | | 97 | |
| TCCP | 3 | 45 | | 42 | | 37 | |
| TCCP | 4 | 45 | | 43 | | 38 | |
| TCCP | 6 | 53 | | 50 | | 40 | |
| PMG+TCCP | 4+3 | 87 | 88 | 98* | 87 | 100* | 94 |
| PMG+TCCP | 4+4 | 82 | 88 | 96* | 87 | 97* | 94 |
| PMG+TCCP | 4+6 | 86 | 90 | 97* | 89 | 100* | 94 |
| PMG+TCCP | 6+3 | 92 | 92 | 99* | 92 | 100* | 98 |
| PMG+TCCP | 6+4 | 92 | 92 | 98* | 93 | 100* | 98 |
| PMG+TCCP | 6+6 | 97* | 93 | 100* | 93 | 100* | 98 |

T=time of application (in days).     * Indicates synergism.

7

TABLE 9

| | | | Yellow nutsedge | | | | | | | | | |
|---|---|---|---|---|---|---|---|---|---|---|---|---|
| | | | % Desiccation | | % Necrosis | | % Chlorosis | | % Necrosis | | % Chlorosis | |
| | Rate | | T+5 | | T+11 | | T+11 | | T+17 | | T+17 | |
| Treatment | lb ai/A | kg ai/ha | O | E | O | E | O | E | O | E | O | E |
| PMG | 0.5 | 0.56 | 2 | | 1 | | 0 | | 1 | | 0 | |
| PMG | 1 | 1.12 | 4 | | 2 | | 0 | | 2 | | 0 | |
| TCCP | 2 | 2.24 | 18 | | 12 | | 0 | | 12 | | 0 | |
| TCCP | 0.5 | 0.56 | 2 | | 1 | | 5 | | 1 | | 2 | |
| TCCP | 1 | 1.12 | 4 | | 3 | | 10 | | 3 | | 3 | |
| TCCP | 2 | 2.24 | 4 | | 4 | | 12 | | −4 | | 3 | |
| PMG+TCCP | 0.5+0.5 | 0.56+0.56 | 3 | 4 | 2 | 2 | 13* | 5 | 6* | 2 | 15* | 2 |
| PMG+TCCP | 1+1 | 1.12+1.12 | 17* | 8 | 15* | 5 | 40* | 10 | 15* | 5 | 22* | 3 |
| PMG+TCCP | 2+2 | 2.24+2.24 | 30* | 21 | 35* | 16 | 43* | 12 | 47* | 16 | 35* | 3 |

EP 0 158 445 B1

The compositions of the present invention are useful as herbicides in controlling the growth of undesired vegetation by postemergence application to the locus where control is desired. The compositions are generally embodied in formulations suitable for convenient application. In general, such formulations will contain inert or occasionally active ingredients or diluent carriers in addition to the active compound. Examples of such ingredients or carriers are water, organic solvents, surface active agents, oil and water, water in oil emulsions, wetting agents, dispersing agents and emulsifying agents. The herbicidal formulations generally take the form of wettable powders, solutions or emulsifiable concentrates.

Wettable powders are finely divided compositions comprising a particulate carrier impregnated with the herbicidal compound and additionally containing one or more surface active agents. The surface active agent promotes rapid dispersion of the powder in aqueous medium to form stable, sprayable suspensions. A wide variety of surface active agents can be used, for example, long-chain fatty alcohols and alkali metal salts of the sulfated fatty alcohols; salts of sulfonic acid; esters of long-chain fatty acids; and polyhydric alcohols, in which the alcohol groups are free, omega-substituted polyethylene glycols of relatively long-chain length. A list of surface active agents suitable for use in agriculture formulations can be found in *Pesticide Formulations* by Wade Van Valkenburg, Marcel Dekker, Inc., N.Y., 1972 at pages 79—84.

The herbicidal compositions can be applied to weed surfaces in the form of a solution in a suitable solvent. Solvents frequently used in herbicidal formulations include kerosene, fuel oil, xylene, petroleum fractions with boiling ranges above xylene, and aromatic petroleum fractions rich in methylated naphthalenes.

Emulsifiable concentrates consist of an oil solution of the herbicide along with an emulsifying agent. Prior to use the concentrate is diluted with water to form a suspended emulsion of soil droplets. The emulsifiers used are usually a mixture of anionic and nonionic surfactants. Other additives such as spreading agents and stickers can be included in the emulsifiable concentrate.

The formulations described above, employing phytotoxic or herbicidally effective amounts of the compositions described herein, are applied to the loci where control is desired in any conventional manner. The loci referred to above include seedlings and actual plants. Liquid compositions can be applied by the use of boom and hand sprayers. The compositions can also be applied from airplanes as sprays because they are effective in very low dosages.

The compositions of the invention are applied postemergent to weed plant surfaces.

The amount of a composition of the present invention which constitutes a phytotoxic or herbicidally effective amount depends upon the nature of the plants to be controlled. The rate of application of active ingredient varies from about 0.01 to about 50 pounds per acre (from about 0.011 to about 56 kg/ha), preferably about 0.1 to about 25 pounds per acre (about 0.11 to about 28 kg/ha) with the actual amount used depending on the overall cost and the desired result. It will be readily apparent to one skilled in the art that compositions exhibiting lower herbicidal activity will require a higher dosage rate for the same degree of control than more active compounds.

## Claims

1. A synergistic herbicidal composition characterised in that it comprises a herbicidally effective amount of 1 - m - trifluoromethylphenyl - 3 - chloro - 4 - chloromethyl - 2 - pyrrolidone and the trimethylsulfonium salt of N - phosphonomethylglycine and optionally a diluent or carrier in a pyrrolidone:N - phosphonomethylglycine weight ratio of from 1:6 to 4:1.

2. A method of controlling undesirable vegetation characterised in that it comprises the application to a locus where such control is desired of a synergistic herbicidal composition as claimed in claim 1.

3. A method as claimed in claim 2 wherein the undesirable vegetation comprises *Rumex crispus, Sorghum halepense, Convolvulus arvenis, Agropyron repens, Poa trivialis* or yellow nutsedge.

## Patentansprüche

1. Synergistische herbizide Zusammensetzung, dadurch gekennzeichnet, daß sie eine herbizid wirksame Menge an 1 - m - Trifluormethylphenyl - 3 - chlor - 4 - chlormethyl - 2 - pyrrolidon und des Trimethylsulfoniumsalzes von N - Phosphonomethylglycin, sowie fakultativ ein Verschnittmittel oder einen Carrier bei einem Pyrrolidon:N - Phosphonomethylglycin - Gewichtsverhältnis von 1:6 bis 4:1 enthält.

2. Verfahren zur Kontrolle unerwünschter Vegetation, dadurch gekennzeichnet, daß es die Applikation einer synergistischen herbiziden Zusammensetzung nach Anspruch 1 an einen Ort umfaßt, an dem diese Kontrolle gewünscht ist.

3. Verfahren nach Anspruch 2, das zur Kontrolle von unerwünschter Vegetation anwendbar ist, zu der *Rumex crispus, Sorghum halepense, Convolvulus arvenis, Agropyron repens, Poa trivialis* oder gelbes Zyperngras (yellow nutsedge) gehören.

**Revendications**

1. Une composition herbicide synergique, caractérisée en ce qu'elle comprend une quantité efficace du point de vue herbicide de 1 - m - trifluoromethylphenyl - 3 - chloro - 4 - chloromethyl - 2 - pyrrolidone et le sel de trimethylsulfonium de N - phosphonomethylglycine et, éventuellement, un diluant ou un support selon un rapport pondéral pyrrolidone/N - phosphonomethylglycine compris entre 1,6 et 4,1.

2. Un procédé pour contrôler la végétation indésirable, caractérisé en ce qu'il consiste à appliquer en un lieu ou un tel contrôle est recherché, une composition herbicide tel que revendiquée dans la revendication 1.

3. Un procédé selon la revendication 2 dans laquelle la végétation indésirable comprend *Rumex crispus, Sorghum halepense, Convolvulus arvenis, Agropyron repens, Poa trivialis* ou *Cyperus esculentus jaune.*